# EUROPEAN PATENT APPLICATION

(11) **EP 1 987 943 A1**
(43) Date of publication of application: **05.11.2008**
(21) Application number: 07107359.7
(22) Date of filing: 02.05.2007
(51) Int. Cl.: B29C 51/02, B29C 45/00, B29C 51/42, B29C 51/46

(54) **Method and system for producing a three-dimensional article**

(71) Applicant: Thermal Cyclic Technologies TCTech i Stockholm AB, 16391 Spånga (SE)
(72) Inventor: Olin, Stefan, 192 55 Sollentuna (SE)
(74) Representative: Loqvist, Gabriel Mathias

(57) **Abstract**

The present invention relates to a method and a system for producing a three-dimensional article (3). According to the invention, a substrate is provided, which has essentially the shape of a disc-shaped optical information carrier, and which has a resin main body provided with at least one distinguishable layer, wherein at least the resin main body is injection-moulded. The substrate is heated to a forming condition. The heated substrate is deformed in a pressurized mould (1,2) such that at least one portion of the substrate is formed to a shape which conforms with the three-dimensional shape of the article to be produced, the thickness of the substrate is essentially maintained, and the at least one layer is deformed together with the main body without being harmed at the at least one portion. Then the deformed substrate is cooled to a non-forming condition. Finally, the at least one portion is isolated from the substrate and thereby, a three-dimensional article having a resin main body that is provided with at least one distinguishable layer is obtained.

## Description

### Technical Field of the Invention

The present invention relates to a method and to a system for producing a three-dimensional article.

### Background Art

Injection moulding is a well known manufacturing technique for making articles from thermoplastic material. A warm resin is injected at high pressure into a mould, which is the inverse of the shape of the article. The temperature and the pressure is sufficiently high to ensure that the resin properly fills the mould. The mould is normally kept at a lower temperature by means of a coolant, wherein the resin is cooled and solidified into the article in the mould. A mould normally separates into at least two halves in order to permit the moulded article to be extracted.

A mould for use in an injection moulding process must withstand high pressures, for example up to 600 tons, and high temperatures in combination with quick cooling times. Furthermore, the mould must be precisely machined in order to be able to exactly reproduce the desired article. Therefore, a problem with the injection moulding method is that it is expensive and time consuming to produce the moulds. Thus, the method is usually only used in mass production where thousands of articles are being produced.

Another problem with the injection moulding process is that the produced articles will be comprised of the used resin composition only. Any painting or coating has to be performed in a subsequent step. While there exist several efficient methods for painting or coating a planar two-dimensional article, for example the method of spin-coating, it is more difficult or at least more time consuming to paint or coat a three-dimensional article.

One known method for producing a three-dimensional article comprising two different materials is a 2-shot or multi shot injection method. The method includes using a mould which is designed to "overmould" an article moulded of a first resin in a first step with a with a second resin in a second step. This can be achieved by having pairs of different cavities within the mould. After injection of the first material, the component is rotated from the one cavity to another. The second material is then injected into the additional cavity before the completed article is ejected from the mould. However, such moulds are even more complicated and expensive to produce than moulds for use in a single injection moulding process.

### Summary of the Invention

It is therefore an object of the present invention to provide an improved method and a system for producing a three-dimensional article, which article has a resin main body that is provided with at least one distinguishable layer.

According to the present invention this object is achieved by the method according to claim 1 and by the system according to claim 16.

According to the invention, a three-dimensional article having a resin main body that is provided with at least one distinguishable layer is obtained by providing a substrate, which has essentially the shape of a disc-shaped optical information carrier, and which has a resin main body provided with at least one distinguishable layer. The step of providing such a substrate includes the step of including injection-moulding the resin main body. According to the invention, at least a portion of the disc-shaped substrate is deformed into the desired three-dimensional article in a pressurized mould, wherein the at least one distinguishable layer remains intact at least at the at least one portion. Finally, the formed article is separated from the substrate using any suitable method, for example cutting or stamping.

Due to using a resin main body for the substrate, which has essentially the size of a disc-shaped optical information carrier, as a standardized, initial material for the article to be produced, the method of injection moulding is very suitable for mass producing the main body portion of the substrate. Furthermore, by using a mainly two-dimensional main body, simple and cost-efficient methods can be used for applying decorative or protecting layers to the main body, for example spin-coating.

According to the invention, the thus obtained essentially disc-shaped, two-dimensional substrate including a distinguishable layer is then used to form the desired three-dimensional article having a resin main body and at least one distinguishable layer. The substrate is deformed in a pressurized mould, wherein at least a portion of the substrate is formed to a shape corresponding to the article. Thereby the at least one layer is deformed together with the main body without being harmed at the at least one portion. For this deforming step a mould can be used which is considerably less expensive than a mould for an injection moulding process. This is due to the fact that the necessary temperature and pressure is much lower than for a injection moulding process because the substrate only has to be heated to a forming condition and a much lower pressure is sufficient for stretching the heated substrate in accordance with shapes of the mould. Furthermore, any material that can be easily machined can be used for the mould without having to consider demands on thermal conductivity and wear resistance as is the case with moulds for injection moulding. Thereby also the time needed for providing a mould for deforming the substrate to the desired three-dimensional article is considerably less as compared to the time needed for providing a mould for injection moulding. Thus, also smaller series of three-dimensional articles having at least one distinguishable layer can be cost-efficient produced with the method and system according to the invention.

Many different three-dimensional articles having a layer of coating or a layer including inscriptions can be produced with the method and system according to the invention. The method and system is especially suitable for producing small details (smaller than an optical information carrier) for consumer electronic device where the design of the details changes quickly. According to one embodiment of the invention, at least semitransparent articles are produced, for example hard-coated display windows, camera lenses or camera lens window for mobile phones. In these and other embodiments the resin main body is at least semi-transparent, but for other applications the resin main body can comprise a coloured resin.

According to the invention, the size and outer contours of the substrate mainly corresponds to a disc-shaped information carrier. In that the substrate is a mainly two-dimensional element, for example a CD or a DVD. The substrate can have such a shape and size that it is suitable for spin-coating.

According to the invention, the substrate comprises a resin main body which is provided with a distinguishable layer. The layer can be distinguishable in any way, for example by being of a different material than the main body or by having a different appearance than the main body. Thus, the layer can constitute a layer including a pattern or a text inscribed or embossed in the main body. The layer can also constitute additional material, for example a coating applied to the main body. Normally, the layer extends over the entire main body, while the layer needs only have a distinguishable portion.

The main body can be provided with one layer only or with several layers, for example several layers on top of each other. The main body can be provided with a layer, for example a coating, on only one surface or be covered by for example, the coating on all sides.

The layer can be provided to the main body during the injection moulding thereof. For example, the mould in the injection moulding machine can be provided with means for embossing a desired pattern or a desired text in the main body during the injection moulding thereof and thereby providing the main body with a layer comprising the embossed pattern or text.

According to the invention, it is also possible to coat the main body after the injection moulding thereof, wherein the coating can be performed in any suitable way. According to one embodiment of the invention, the desired coating is applied to the resin main body by spin-coating or sputtering. These are methods which are especially cost-efficient and suitable for coating bodies having the shape and size of a disc-shaped information carrier.

According to the invention, the coating can comprise hard surface coating, anti-reflex coating, a printed coating or a painted coating. The thickness of the layer can with respect to a sputtered coating be for example 50 - 60 nanometers, and with respect to a printed coating for example 1 - 10 micrometers.

According to one embodiment of the invention, the substrate is produced by using a method and a system for producing optical information carriers. These methods have been developed and optimized during many years and have proved to be very reliable and cost-efficient. Furthermore, some of these methods and systems include devices for spin-coating and/or sputtering. Some of these methods and systems even include devices for heating the substrate. Consequently, by using this embodiments of the invention, the operation and use of these types of machines can advantageously be extended to production of other products. The mould for deforming the substrate and the related equipment can be provided as subunit ready for being connected to a conventional injection moulding machine.

According to the invention, the desired three-dimensional article is produced by deforming at least a portion of the substrate in a pressurized mould. The mould can include a positive (a protrusion) or a negative (a cavity) shaping element conforming to the shape of the article. The mould can include several such shaping elements for producing several articles from one substrate.

In order to place the disc-shaped, normally circular substrate in the mould with correct orientation with respect to any pattern in the distinguishable layer and the shaping elements in the mould, the substrate can be provided with a reference mark for providing information on the orientation of the substrate.

In order to deform the substrate, the substrate is heated to a forming condition and the mould is pressurized such that at least a portion of the substrate is deformed, in accordance with the shape of the mould, to the shape of the three-dimensional article.

According to one embodiment of the invention, the substrate is heated during a selected time period to a selected core temperature, which time and core temperature are selected such that the resin of the substrate is plastic deformable without redistributing the thickness of the substrate and the at least one distinguishable layer of the substrate is unharmed.

According to one embodiment of the invention, the at least one portion of the substrate is deformed to a selected deformation depth, which is selected such that the resin of the main body at the one portion undergoes plastic deformation essentially without change in thickness and the at least one layer at the one portion is deformed together with the main body at the portion without being harmed.

Thus, the at least one distinguishable layer is heated and deformed without being harmed, which is to be understood such that the layer is not damaged to such an extent that the quality of the three-dimensional article to be produced is influenced. To what extent damages are acceptable depends on the type of layer and coating. For example, in a pattern or information text layer, the text and pattern should be uncorrupted. With respect to for example protective coating such as hard coating, the coating should not comprise any cracks or serious flaws.

According to one embodiment of the invention, the mould is pressurized by supplying a compressed medium such as a compressed fluid, for example compressed air, to the mould. The mould can be pressurized by using a positive or a negative pressure. Normally the mould comprises a base, a lid, a supply channel for a compressed medium and an evacuating channel for the compressed medium and any trapped air.

The substrate can be heated prior to being placed in the mould or after being placed in the mould together with the mould. Alternatively, the substrate and the mould can be heated separately. It is also possible to place the substrate in a previously heated mould such that the substrate is heated by the mould. The heating can take place in any suitable way, for example in an oven or through heating elements in the mould.

After the deformation of the at least one portion of substrate, the substrate is cooled to a non-forming condition, or in other words, to a condition allowing removal of the substrate from the mould and handling of the substrate without damaging the deformed portion. The cooling can be achieved in any suitable way, for example by the ambient temperature or by supplying a coolant to the mould.

According to one embodiment of the invention, the temperature of the mould is controlled through the pressure and temperature of a compressed medium supplied to the mould. This can be used during the heating of the substrate to a forming condition or during cooling of the substrate to a non-forming condition or both. This embodiment is advantageous in that the heating and/or cooling time can be exactly controlled.

### Brief Description of the Drawings

The invention may be performed in many various ways, and by way of example only, one embodiment thereof will now be described in detail with reference being made to the accompanying drawings, in which
Fig. 1 is an exploded view showing a mould of a deforming unit of a system according to the present invention for producing a three-dimensional article and a substrate formed by the system;
Figs. 2 - 4 show the mould and the substrate inserted in the mould during subsequent steps of the method for producing a three-dimensional article according to the invention;
Fig. 5 shows a substrate with three deformed portions each corresponding to a three-dimensional article.

### Detailed Description of Preferred Embodiments of the Invention

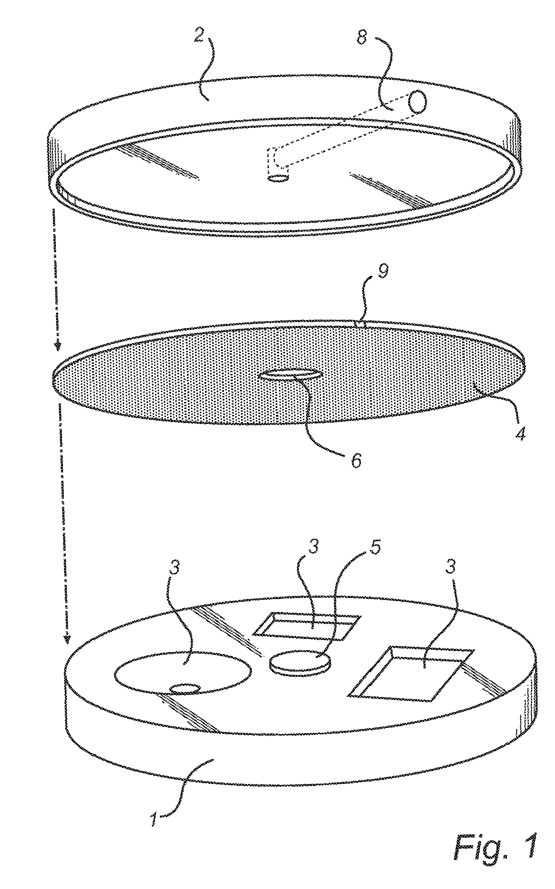

With reference to Fig. 1, a mould for a system for providing a three-dimensional article having a resin main body, which is provided with at least one distinguishable layer, according to one embodiment of the invention is shown.

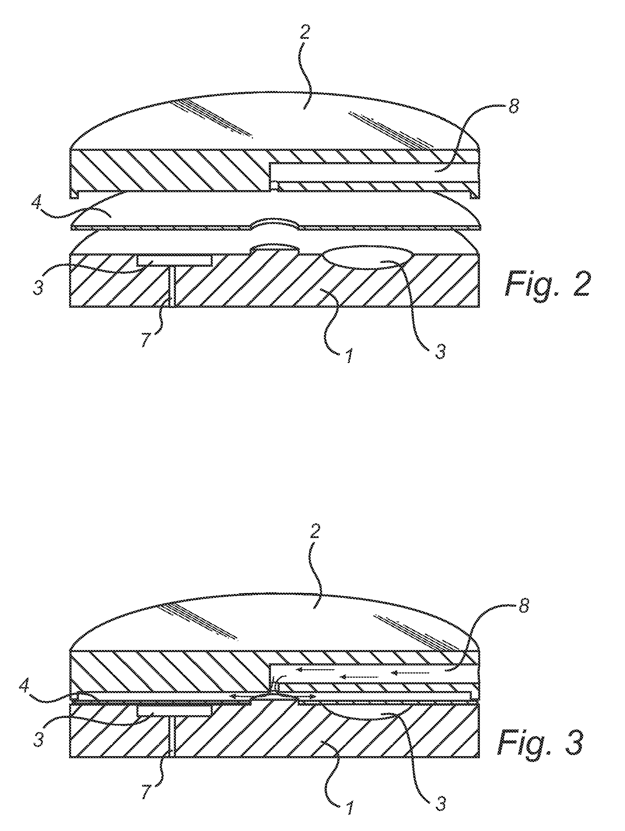

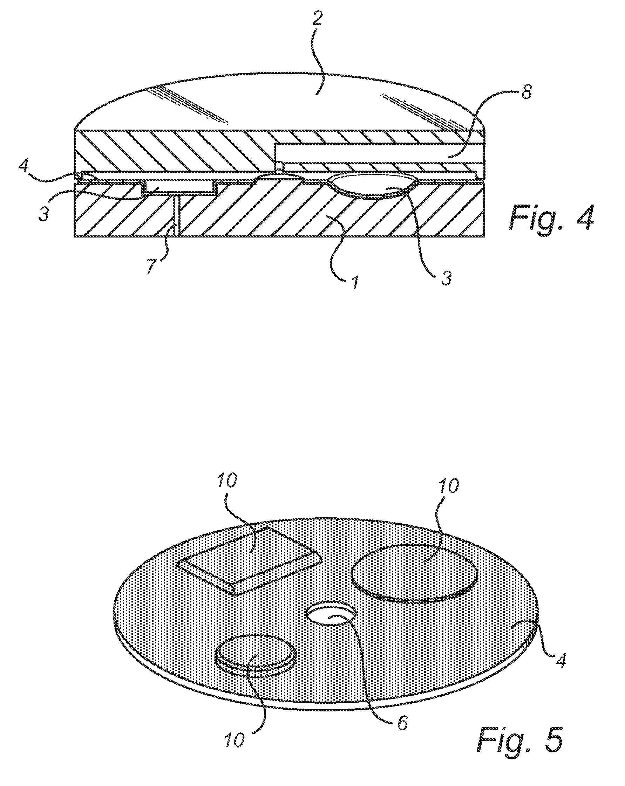

The mould comprises a mould base 1 and a mould lid 2. The mould base is provided with shaping elements in the form of three cavities 3, which each conform to an article which is to be produced from a substrate 4. The mould base 1 is further provided with a circular protrusion 5 for cooperating with a circular through hole 6 in the substrate 4. Each cavity is provided with an evacuating channel 7, c.f. Fig. 2 - 4.

The mould lid is provided with a supply channel 8 for supplying a compressed medium, in this case compressed air, to the inside of the mould.

The mould base 1 and the mould lid 2 are movably arranged relative each other such that a substrate 4 can be inserted and removed from the mould. The mould further comprises means (not shown) for clamping and locking the mould halves 1, 2 over the substrate 4 when the mould is pressurized for deforming the substrate 4.

The mould halves 1, 2 are machined from an aluminium block using any suitable method for marching the cavities, for example milling.

The substrate used in this embodiment of the invention comprises a transparent resin main body which is provided with at least one distinguishable layer in the form of a protective hard coating on one surface only. The substrate is further provided with a reference mark 9.

With reference to Figs. 2 - 5 the final steps in a method for providing a three-dimensional article having a resin main body, which is provided with at least one distinguishable layer, according to one embodiment of the invention, is shown. The method according to this example embodiment comprises the following steps.

First a disc-shaped substrate is provided by using a method for producing optical information carriers. For this step a conventional machine for producing disc-shaped optical information carriers from resin pellets through injection moulding is used (not shown in the Figures). Thus, the step includes injection moulding a disc-shaped, resin main body, wherein the main body obtains a central through hole 6 which is used for carrying the main body from one machine position to the next and for holding the main body during machining operations thereon.

The thus obtained disc-shaped main body has a size and shape suitable for spin-coating, which also can be efficiently performed in the known machine for producing optical information carriers. In this embodiment, the main body is made of a transparent resin which is given protective hard coating by spin coating. Before leaving the conventional injection moulding machine, the substrate 4 is provided with a reference mark 9 at its periphery, c.f. Fig. 1.

A mould for use in the method is provided. The mould is machined from an aluminium block and comprises a mould base 1, which has three cavities 3 each conforming to an article to be produced, and a mould lid 2.

The mould halves 1, 2 are placed in a heating apparatus in the form of an oven, where the mould halves are heated. After the mould halves 1, 2 have reached the necessary temperature, they are removed from the oven.

Before the substrate 4 is placed in the mould, the substrate is oriented by using the reference mark 9. Then the mould halves 1, 2 are separated such that the substrate can be inserted into the mould between the halves 1, 2. The substrate 4 is placed in the mould in an oriented manner, wherein the portions of the substrate 4, which are intended to be deformed, are located above the respective cavity 3. Then the mould is closed and the halves 1, 2 are clamped together by not shown locking means.

Due to the heated mould halves 1, 2, the substrate 4 is heated to a forming condition in the mould. The relevant temperature is the core temperature of the substrate 4. However, it would also be possible to heat the mould 1, 2 together with the substrate 4, after the substrate 4 has been placed in the mould. This could be advantageous in that, when removing the mould with the substrate 4 from the oven, there is no extreme hurry since the heated mould will prevent too quick cooling of the substrate 4. Hereby it would also be ensured that the mould and the substrate have the same temperature.

In the next step, the heated substrate is deformed in the mould by supplying a compressed medium in the form of compressed air to the inside of the mould through the supply channel 8 such that the inside of the mould is pressurized. The compressed air is supplied from a pressure source (not shown) which is connected to an apparatus for regulating the temperature of the compressed air, in this case a heating apparatus (not shown). The compressed air forms an air cushion on the lid side of the substrate which pushes the substrate into the cavities forcing the substrate to stretch and undergo plastic deformation at the cavities. Should there be any air trapped below the substrate 4 in any of the cavities 3, this air is allowed to evacuate through the evacuating channel 7. Thus, three portions 10 of the substrate 4 are each formed to a shape conforming to one of the articles to be produced, wherein the coating is deformed together with main body without being harmed by the heating or the stretching.

Thereafter, the substrate is cooled to a non-forming condition. This is done by heating the compressed air to a temperature lower than the core temperature of the substrate 4 at the forming condition thereof and supplying the tempered compressed air to the mould through the supply channel 8 at an adequate pressure and flow rate by using a control unit (not shown).

This cooling method is advantageous in that the cooling time can be exactly controlled. However, the cooling can of course be performed in any other suitable way, for example by supplying a separate coolant to channels inside the mould base 1 or mould lid 2, or by just letting the substrate cool in the ambient air.

The mould is depressurized by evacuating compressed air from the inside of the mould through the supply channel 8. However, alternatively, a separate channel could also be used for evacuating the compressed air. It is also possible to just let the compressed air escape into the ambient air.

Two examples of substrates, core temperatures for the forming condition, heating time and deformation depth are given in the table below.

| **Material** | PMMA | PC |
|---|---|---|
| **Thickness of substrate [mm]** | 0,6 | 0,6 |
| **Temperature [C]** | 85 | 125 |
| **Heat time [min]** | 0,5 | 0,5 |
| **Air pressure [Bar]** | 7 | 7 |
| **Coatings** | Hardcoat | Metal |
| **Shape** | Square, sharp edges | Dome, elliptical |
| **Shape depth [mm]** | 2 | 3 |

When the substrate 4 has cooled to a non-forming condition, the means for clamping and locking the mould halves 1, 2 are released and the mould halves 1, 2 are separated. Then the substrate is ejected or removed from the mould.

Finally, the deformed portions 10 are isolated from the substrate 4 by cutting, wherein three three-dimensional articles, which each has a resin main body with a distinguishable layer of hard-coating, are obtained, in this case three types of windows for a mobile phone.

## Claims

1. A method for producing a three-dimensional article, comprising the steps of
providing a substrate, which has essentially the shape of a disc-shaped optical information carrier, and which has a resin main body provided with at least one distinguishable layer, including injection-moulding the resin main body;
heating the substrate to a forming condition;
deforming the heated substrate in a pressurized mould such that
at least one portion of the substrate is formed to a shape which conforms with the three-dimensional shape of the article to be produced,
the thickness of the substrate is essentially maintained, and
the at least one layer is deformed together with the main body without being harmed at the at least one portion;
cooling the deformed substrate to a non-forming condition;
isolating the at least one portion from the substrate and thereby obtaining a three-dimensional article having a resin main body that is provided with at least one distinguishable layer.

2. The method according to claim 1, wherein the step of providing the substrate comprises the step of injection-moulding the resin main body with at least one flat surface, and the step of coating the flat surface with the least one distinguishable layer.

3. The method according to claim 2, wherein the step of coating the flat surface with the least one distinguishable layer comprises the step of spin-coating and or sputtering.

4. The method according to any of the claims 1 - 3, wherein the at least one distinguishable layer is a coating on a surface of the resin main body, such as hard surface coating, anti-reflex coating, a printed pattern or a painted pattern.

5. The method according to any of the claims 1 - 4, wherein the step of providing the substrate comprises the step of providing a central through hole in the substrate.

6. The method according to any of the claims 1 - 5, wherein the step of providing the substrate is performed by using a method for producing optical information carriers.

7. The method according to any of the claims 1 - 6, wherein the step of heating the substrate to a forming condition comprises heating the substrate during a selected time period to a selected core temperature, which time and core temperature are selected such that the resin of the substrate is plastic deformable without redistributing the thickness of the substrate and the at least one layer of the substrate is unharmed.

8. The method according to any of the claims 1 - 7, wherein the step of deforming the heated substrate in a pressurized mould comprises deforming the at least one portion of the substrate to a selected deformation depth, which is selected such that the resin of the main body at the one portion undergoes plastic deformation essentially without change in thickness and the at least one layer at the one portion is deformed together with the main body at the portion without being harmed.

9. The method according to any of the claims 1 - 8, wherein the step of heating the substrate to a forming condition comprises heating at least a part of the mould.

10. The method according to any of the claims 1 - 9, wherein the step of deforming the heated substrate in a pressurized mould comprises supplying a compressed medium to the mould, wherein the medium preferably is a fluid in the form of air.

11. The method according to any of the claims 1 - 10, wherein the step of cooling the deformed substrate to a non-forming condition comprises cooling at least a part of the mould while the substrate is placed in the mould.

12. The method according to claim 10 and/or 11, wherein the at least part of the mould is heated and/or cooled by supplying a compressed fluid having a suitably selected temperature to the inside of the mould.

13. The method according to claim 12, wherein the cooling time for cooling the deformed substrate to a non-forming condition is controlled by selecting pressure, temperature and supply rate of the compressed fluid.

14. The method according to any of the claims 1 - 13, wherein at least the one portion of the substrate is at least semi-transparent.

15. The method according to any of the claims 1 - 14, wherein the three-dimensional article is an article for a consumer electronic device, such as a detail of a mobile phone housing including a display window, a camera lens or a camera lens cover.

16. System for producing a three-dimensional article, comprising
an injection moulding unit and a layer forming unit, which are arranged to form a substrate, wherein the substrate essentially has the shape of a disc-shaped optical information carrier, and wherein the substrate has a resin main body provided with at least one distinguishable layer,
a heating unit, which is arranged to heat the substrate to a forming condition, and
a deforming unit comprising a pressurizeable mould, wherein the mould is arranged such that, when a heated substrate is placed in the mould and when the mould is pressurized,
at least one portion of the substrate is formed to a shape which conforms with the three-dimensional shape of the article to be produced,
the thickness of the substrate is essentially maintained, and
the at least one layer is deformed together with the main body without being harmed at the at least one portion;
an isolating unit, which is arranged to isolate the at least one portion from the substrate after the substrate has cooled to a non-forming condition, and thereby obtaining a three-dimensional article having a resin main body that is provided with at least one distinguishable layer.

17. System according to claim 16, wherein the layer forming unit is a surface coating unit.

18. System according to claim 17, wherein the coating unit is a spin-coating unit or a sputtering unit.

19. System according to any of the claims 16 - 18, wherein the injection moulding unit and the layer forming unit are comprised in a machine for producing optical information carriers.

20. System according to any of the claims 16 - 19, wherein the heating unit is a heating apparatus, such as an oven.

21. System according to any of the claims 16 - 20, wherein the pressurizable mould comprises a mould base, which has at least one cavity that has a shape which conforms to the shape of the article, and a mould lid.

22. System according to claim 21, wherein the mould lid comprises a channel for supplying a pressurized fluid to the inside of the mould and wherein the mould base comprises an evacuating channel for evacuating air from the cavity.

23. System according to any of the claims 16 - 22, further comprising a compressed fluid source for supplying compressed fluid at a selected supply rate, a heating/cooling device for heating and/or cooling the compressed fluid, and a control unit for controlling pressure and temperature of the compressed fluid before it is supplied to the mould for pressurizing and/or changing the temperature of the mould.
